# EUROPÄISCHE PATENTSCHRIFT

(11) **EP 0 661 665 B1**
(45) Veröffentlichungstag und Bekanntmachung des Hinweises auf die Patenterteilung: **08.10.1997**
(21) Anmeldenummer: 93119328.8
(22) Anmeldetag: 01.12.1993
(51) Int. Cl.: G06K 19/02, A45C 11/18

(54) **Chipkartenhülle**
Protective case for an ic-card
Etui pour une carte à puce

(43) Veröffentlichungstag der Anmeldung: 05.07.1995
(73) Patentinhaber: Ritter, Gerhard, 74019 Heilbronn (DE)
(72) Erfinder: Ritter, Gerhard, 74019 Heilbronn (DE)
(74) Vertreter: Klocke, Peter, Dipl.-Ing.

(56) Entgegenhaltungen:
- EP-A- 0 201 410
- DE-U- 8 533 119
- US-A- 4 141 400
- US-A- 4 979 619

## Beschreibung

Die vorliegende Erfindung betrifft eine Chipkartenhülle gemäß dem Oberbegriff des Hauptanspruchs.

Bei den heutigen als Zahlungsmittel verwendeten Karten, die insbesondere bei Bankautomaten, Telefon usw. verwendet werden, werden immer häufiger integrierte elektronische Bausteine (Chips) eingebaut. Diese Chipkarten zeigen eine besondere Anfälligkeit für das Ausbrechen des Chips durch Biegen oder Drücken der Karte beim Tragen in der Gesäßtasche, dem Geldbeutel oder sonstigen persönlichen Behältnissen. Meißtens sind die Chipkarten auch noch mit Magnetstreifen auf der Rückseite versehen, die beim ungeschützten Transportieren der Chipkarte leicht beschädigt werden können. Auch eine Beschädigung der Kanten der Karten, die für den Gebrauch der Chipkarten in den Automaten von Bedeutung sind, kann leicht durch den ungeschützten Transport der Chipkarte erfolgen.

Aus der US-A-4 141 400 ist eine Schutzhülle für Magnetkarten bekannt, die an der oberen Flachseite eine Eingrifföffnung hat, aber ansonsten eine einliegende Magnetkarte an den Flachseiten vollständig abdeckt. Im Innern der Schutzhülle sind in Längsrichtung verlaufende Stege an der oberen Innenfläche ausgebildet, die sicherstellen, daß der Magnetstreifen einer einliegenden Magnetkarte mit der oberen Innenfläche nicht in Berührung kommt und somit beim Ein- und Ausschieben nicht verkratzt wird. Die in Längsrichtung der Schutzhülle verlaufenden Stege tragen zur Quersteifigkeit der Schutzhülle praktisch nicht bei.

Aus der DE 93 07 959 U1 ist eine Kartenhülle für Chipkarten, Telefonkarten oder dergleichen dünnwandige Karten bekannt, die als einstückiges Kunststoffteil hergestellt ist, und deren Außenkontur die eingeschobene Karte nur im Bereich der Längsränder überragt. Diese Kartenhülle weist eine im wesentlichen der Form der Chipkarte entsprechende Außenkontur auf, ist extrem dünn und trägt nicht wesentlich auf, ist biegesteif, so daß die Karte hinsichtlich Verknickungen geschützt ist, und stellt einen guten Schutz für die Kanten dar.

Diese bekannte Chipkartenhülle verhindert jedoch noch nicht sicher, das Ausbrechen des Chips, wie oben beschrieben, und ist auch hinsichtlich des Schutzes des Magnetstreifens noch nicht optimal ausgestaltet.

Der vorliegenden Erfindung liegt daher die Aufgabe zugrunde, eine Chipkartenhülle vorzuschlagen, die einen verbesserten Schutz der Chipkarte gegen Beschädigung gewährleistet. Dabei soll insbesondere der Schutz gegen Beschädigung der für die Identifizierung der Chipkarte notwendigen Teile verbessert werden.

Die Lösung dieser Aufgabe erfolgt durch die im Anspruch 1 angegebenen Merkmale. Weitere vorteilhafte Ausgestaltungen sind den Unteransprüchen zu entnehmen.

Die erfindungsgemäße Chipkartenhülle weist mindestens einen Steg auf, der die an den gegenüberliegenden Seiten Längsrändern angeordneten Führungsstreifen verbindet. Dabei ist der Steg in einem Bereich angeordnet, in dem sich bei eingeschobener Chipkarte der Chip befindet. Da üblicherweise der Chip auf der Chipkarte in einer Hälfte angeordnet ist, befindet sich auch der Steg in der Nähe der Stirnkante der Chipkartenhülle. Der Steg weist eine Breite auf, die zumindest die Chipfläche überdeckt, wobei jedoch zur Sicherheit, die Breite des Steges größer gewählt werden kann, um bei verschiedenen Chipkarten mit verschieden platzierten Chips einen ausreichenden Bereich abzudecken. Ein derartiger Steg sorgt für eine gute Haltbarkeit des Chips und verhindert das Ausbrechen und Verletzen des Chips.

Der Steg weist eine leichte Wölbung auf, was die Handhabbarkeit verbessert und bei der spritzgießtechnischen Herstellung Vorteile bietet. Darüberhinaus wird dadurch ein Einschnappen des Steges bei herausgezogener Chipkarte verhindert. Der Abstand zwischen dem Steg und dem Bodenteil bleibt dadurch auch bei herausgezogener Karte gleich. Um einer eventuellen Verdickung bei der Chipkarte im Bereich des Chips Rechnung zu tragen, kann der Steg gemäß einer weiteren bevorzugten Ausführungsform am Randbereich, an dem der Steg an die Führungsstreifen angrenzt, dicker ausgebildet sein, als in der Mitte. In einer anderen vorteilhaften Ausgestaltung befindet sich an der der Chipkarte zugewandten Seite eine Vertiefung zur Aufnahme des Chips, was insbesondere bei Chipkarten, die im Bereich des Chips eine größere Dicke aufweisen, notwendig ist.

Zum Schutz des Magnetstreifens, der, wie oben erwähnt, üblicherweise weiterhin auch bei den Chipkarten zumindest für eine Übergangszeit vorhanden ist, weist das Bodenteil mindestens eine in Hüllenlängsrichtung verlaufende Vertiefung auf, die in dem Bereich angeordnet ist, in dem sich bei eingeschobener Chipkarte der Magnetstreifen befindet. Dadurch liegt der Magnetstreifen nicht auf dem Bodenteil auf, so daß eine Beschädigung des Magnetstreifens beim Einschieben in die Chipkartenhülle durch diese und durch Schmutz in der Chipkartenhülle verhindert wird. Vorzugsweise sind in dem Bodenteil zwei Vertiefungen vorgesehen, so daß es unerheblich ist, welche Stirnkante der Chipkarte zuerst in die Chipkartenhülle eingeschoben wird.

Durch die vorstehend genannten Maßnahmen wird gewährleistet, daß der Chip beim Transport durch Biegen oder Drücken der Karte nicht ausbrechen kann. Dies setzt jedoch voraus, daß die Karte in der richtigen Art und Weise in die Chipkartenhülle eingeführt wird. Gemäß einer weiteren bevorzugten Ausführungsform weist die Chipkartenhülle einen zweiten Steg auf, der entsprechend dem ersten Steg ausgebildet sein kann und mit gleichem Abstand zu der entsprechenden Stirnseite der Chipkartenhülle angeordnet ist. Durch diese Ausgestaltung ist es unerheblich, wie die Chipkarte in die Chipkartenhülle eingeschoben wird. Der Schutz des Chips ist damit auch beim Verdehen der Chipkarte gewährleistet. Zwischen den beiden Stegen ergibt sich zwangsläufig ein Freiraum, der unter anderem zum Herausschieben der Karte durch den Benutzer zur Verfügung steht.

Gemäß einer weiteren vorteilhaften Ausgestaltung ist zwischen den beiden Vertiefungen eine weitere Vertiefung angeordnet, die flacher und schmäler sein kann als die beiden äußeren Vertiefungen. Diese dient dazu, einen Raum vorzusehen, in dem beispielsweise von der Chipkarte hochstehende Schriftzeichen oder der Unterschriftsstreifen beim Einschieben der Chipkarte in die Chipkartenhülle gelangen können. Der Querschnitt der Oberfläche des Bodenteils kann dabei im wesentlichen sinusförmig ausgebildet sein, wobei im Bereich des Maximums zwischen zwei Tälern ein flacher verlaufendes Tal angeordnet sein kann. Es ist auch jede andere Wellenform möglich, die geeignet ist, die vorstehend erwähnten Funktionen zu übernehmen.

Zusätzlich weist die Oberfläche des Bodenteils in einer zweckmäßigen Ausführungsform im Bereich der Einschuböffnung mindestens eine Reinigungsfläche für Magnetstreifen auf.

Zweckmäßigerweise werden zwei Reinigungsflächen vorgesehen sein, damit auch hier die Einschubrichtung der Chipkarte nicht beachtet werden muß. Die Reinigungsflächen entsprechen im wesentlichen der Breite des Magnetstreifen und können je nach Herstellungsweise als verschiedenartig ausgebildete aufgerauhte Flächen ausgestaltet sein, über die der Magnetstreifen beim Einschieben in die Chipkartenhülle greift, so daß sich auf dem Magnetstreifen befindender Schmutz abgestreift wird. Gemäß einer bevorzugten Ausführungsform weist die Reinigungsfläche in Längsrichtung verlaufende Stege auf. Die Oberkante der Stege kann dabei gegenüber dem Rest des Bodenteils im Bereich der Einschuböffnung erhöht sein, oder auch dieser entsprechen. Im letzteren Fall ist das Bodenteil zwischen den Stegen dünner ausgestaltet.

Gemäß einer weiteren bevorzugten Ausführungsform ist die Chipkartenhülle als einstückiges Kunststoff-Spritzteil hergestellt, wodurch eine optimale Haltbarkeit und eine kostengünstige Herstellbarkeit erreicht wird. Dabei ist die Chipkartenhülle aus einem Material, beispielsweise Acrylglas (PMMA), gefertigt, das der Wiederverwertbarkeit zugeführt werden kann und keinen Weichmacher enthält. Die Chipkartenhülle ist extrem flach und leicht elastisch und trotzdem mit einer langlebigen Steifigkeit ausgestattet.

Die erfindungsgemäß ausgestaltete Chipkartenhülle stellt somit eine Hülle zur Verfügung, die im Hinblick auf den Schutz der wichtigen Teile einer Chipkarte allen Anforderungen gerecht wird. Durch ihre Größe, die im wesentlichen der Chipkarte entspricht, ist sie auch für den Benutzer gut handhabbar.

Nachfolgend wird die Erfindung anhand von Ausführungsbeispielen in Verbindung mit den begleitenden Zeichnungen näher erläutert. Es stellen dar:
Figur 1 eine perspektivische Ansicht einer Chipkartenhülle mit einem Steg;
Figur 2 eine Frontansicht der Chipkartenhülle aus Figur 1 und eine Frontansicht einer Chipkartenhülle eines anderen Ausführungsbeispiels;
Figur 3 eine Draufsicht auf eine Chipkartenhülle mit zwei Stegen und
Figur 4 eine Stirnansicht der Chipkartenhülle gemäß Figur 3 und eine vergrößerte Einzelheit X.

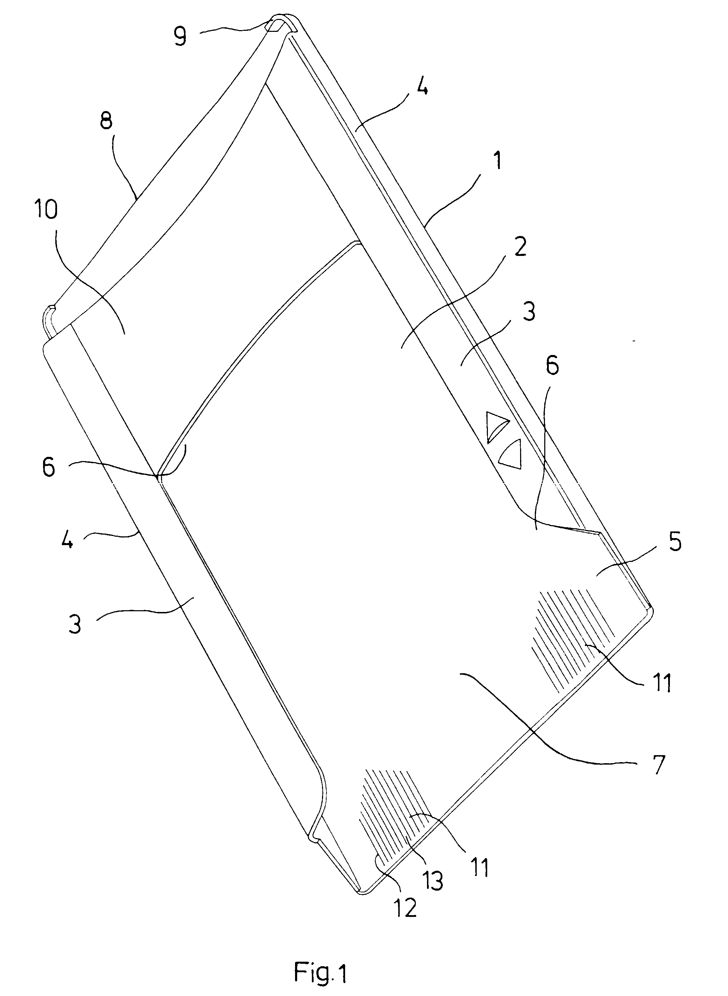

Figur 1 zeigt eine Chipkartenhülle 1 mit einem Bodenteil 2, das an den Seitenlängsrändern in zwei Führungsstreifen 3 übergeht, die zusammen mit der Oberfläche 5 des Bodenteils 2 den Kartenaufnahmeraum 6 bilden. An der der stirnseitigen Einschuböffnung 7 gegenüberliegende Seite 8 befinden sich Kartenanschläge 9, die ein Herausschieben aus der Chipkartenhülle 1 verhindern. Die in Figur 1 dargestellte Chipkartenhülle 1 weist einen Steg 10 auf, der im Bereich der Stirnseite 8 angeordnet ist, und eine Breite aufweist, die im wesentlichen der größten Ausdehnung eines Chips (nicht dargestellt) entspricht und nach außen leicht gewölbt ist. Im Bereich der Einschuböffnung 7 sind zwei Reinigungsflächen 11 angeordnet, die Stege 12 und zwischen den Stegen 12 angeordnete Vertiefungen 13 aufweisen.

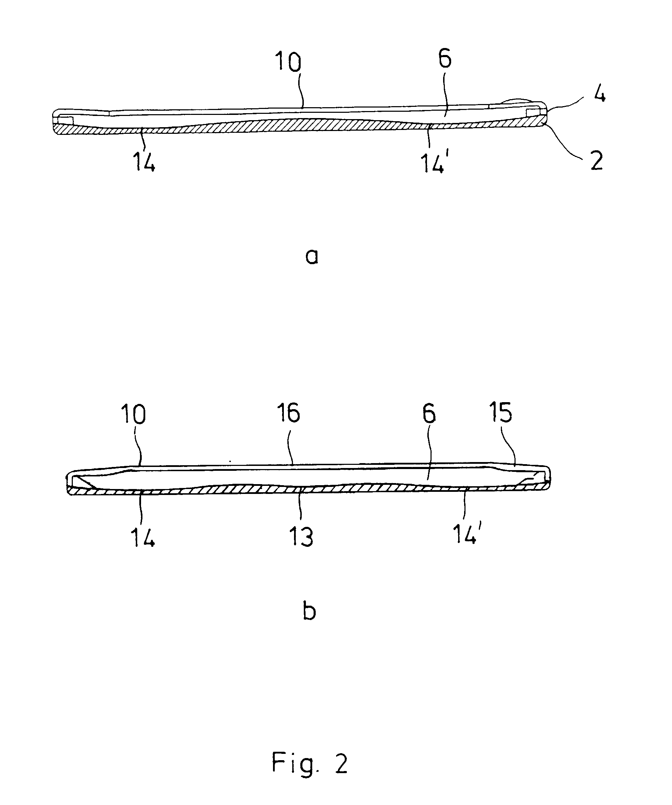

Wie aus Figur 2a ersichtlich, weist das Bodenteil 2 einen sinusförmigen Querschnitt mit zwei Wellentälern 14, 14' auf, in denen bei eingeschobener Chipkarte (nicht dargestellt) sich der Magnetstreifen befindet. Bei der in Figur 2b dargestellten Ausführungsform ist der Steg 10 im Randbereich 15 dicker ausgebildet als in der Mitte 16, um eine Erhöhung der Chipkarte durch den Chip Rechnung zu tragen. In Figur 2b ist eine Alternative Wellenform der Oberfläche 5 des Bodenteils 2 dargestellt. Dabei ist ein weiteres Wellental 13 zwischen den Wellentälern 14 und 14' angeordnet ist. Das Wellental 13 ist in der Mitte flacher ausgebildet und dient der Aufnahme der Unterschriftsstreifens oder auf der Karte angeordneten Erhebungen.

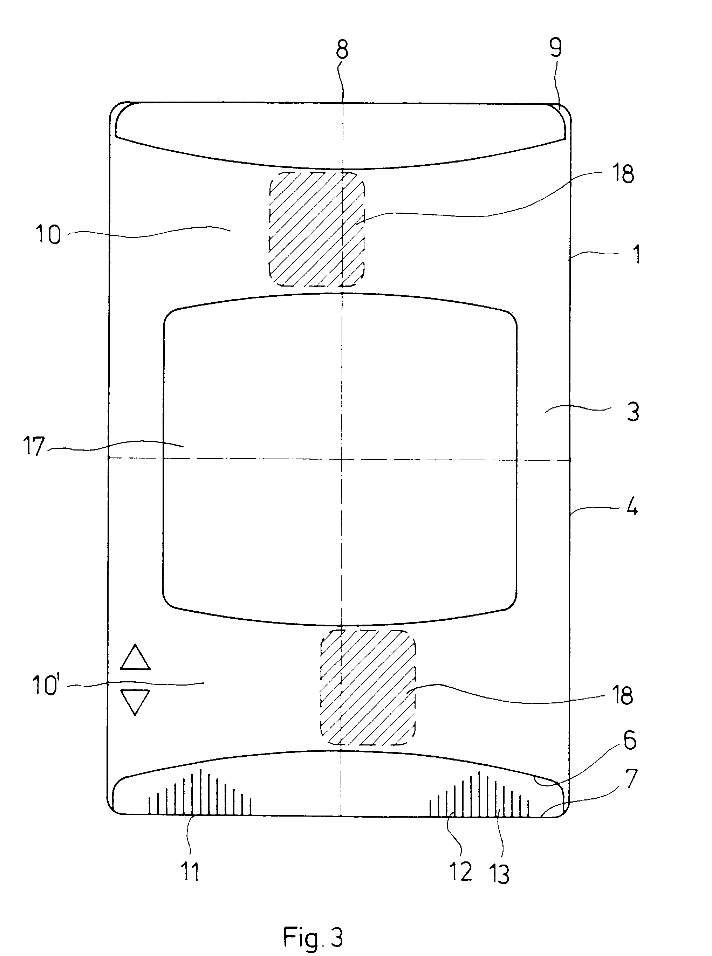

Figur 3 zeigt eine andere Chipkartenhülle 1 mit zwei Stegen 10, 10', die in gleicher Entfernung von den beiden Stirnseiten 7, 8 entfernt sind. Der Bereich 17 zwischen den beiden Stegen 10 und 10' bleibt für den Benutzer beispielsweise zum Herausschieben der Karte zugänglich. Die beiden Stege 10, 10' weisen jeweils einen Aufnahmebereich 18 für das Chip auf. Sie können beispielsweise als Vertiefungen auf der Unterseite der Stege ausgestaltet sein. Bei Chipkarten, die in dem Chipbereich eine Erhöhung aufweisen gelangt diese dann in den Aufnahmebereich 18. Durch die Anordnung von zwei Stegen mit den entsprechenden Aufnahmebereichen ist der Chip auch beim Verdrehen immer optimal geschützt.

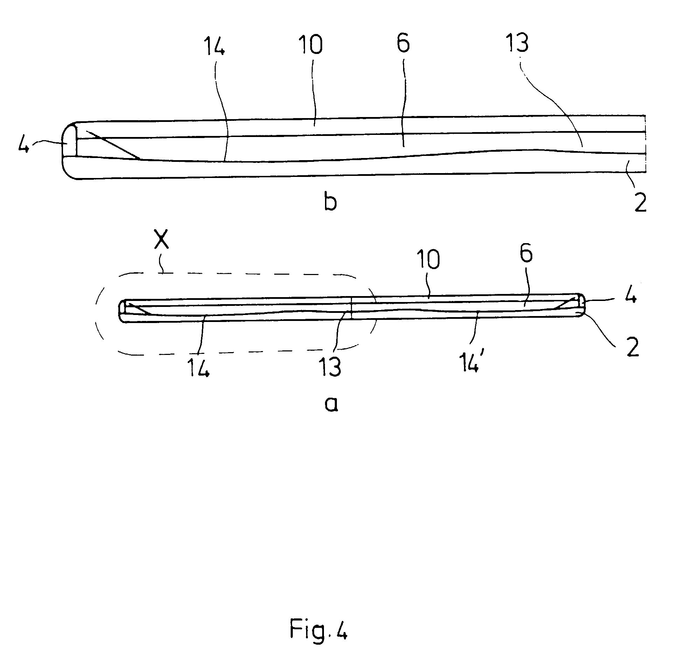

Die in Figur 4 dargestellte Stirnansicht 4a mit der Einzelheit X in Figur 4b zeigt noch einmal den Verlauf der Oberfläche 5 des Bodenteils 2 mit den Wellentälern 13, 14 und 14'.

## Patentansprüche

1. Chipkartenhülle (1) mit einem geschlossenen Bodenteil (2), das an den gegenüberliegenden Seitenlängsrändern (4) in zwei Führungsstreifen (3) übergeht, die zusammen mit dem Bodenteil (2) den Aufnahmeraum (6) für die Chipkarte bilden, einer stirnseitigen Einschuböffnung und mindestens einem im Bereich der der Einschuböffnung gegenüberliegenden Stirnseite (8) angeordneten Kartenanschlag (9), **dadurch gekennzeichnet**, daß die Führungsstreifen (3) über mindestens einen nach außen gewölbten Steg (10) verbunden sind, der in einem Bereich angeordnet ist, in dem sich bei eingeschobener Chipkarte der Chip befindet, und der eine Breite aufweist, die zumindest die Chipfläche überdeckt, und daß das Bodenteil (2) an seiner Oberfläche (5) eine im Querschnitt wellenförmige Kontur mit mindestens einer in Hüllenlängsrichtung verlaufenden Vertiefung (14) hat, die in einem Bereich angeordnet ist, in dem sich bei eingeschobener Chipkarte der Magnetstreifen befindet.

2. Chipkartenhülle nach Anspruch 1, **dadurch gekennzeichnet,** daß der Steg (10) in dem an den Führungsstreifen (3) angrenzenden Bereich (15) dicker ausgebildet ist als in der Mitte (16).

3. Chipkartenhülle nach Anspruch 1 oder 2, **dadurch** **gekennzeichnet,** daß der Steg (10, 10') auf der der Chipkarte zugewandten Seite eine Vertiefung (18) für die Aufnahme des Chips aufweist.

4. Chipkartenhülle nach einem der vorangegangenen Ansprüche, **dadurch gekennzeichnet,** daß zwei mit Abstand zueinander angeordnete Stege (10, 10') vorgesehen sind, wobei die beiden Stege gleichweit von den beiden gegenüberliegenden Stirnseiten (7, 8) entfernt sind.

5. Chipkartenhülle nacheinem der vorhergehenden Ansprüche, **dadurch gekennzeichnet,** daß das Bodenteil (2) zwei Vertiefungen (14) aufweist.

6. Chipkartenhülle nach Anspruch 5, **dadurch gekennzeichnet,** daß das Bodenteil (2) zwischen den beiden Vertiefungen (14) eine weitere Vertiefung (14') für auf der Chipkarte angeordnete Erhebungen aufweist.

7. Chipkartenhülle nach einem der vorangegangenen Ansprüche, **dadurch gekennzeichnet,** daß auf der Oberfläche (5) des Bodenteils im Bereich der Einschuböffnung (7) mindestens eine Reinigungsfläche (11) für Magnetstreifen angeordnet ist, die vorzugsweise in Längsrichtung verlaufende Stege (12) umfaßt.

8. Chipkartenhülle nach einem der vorangegangenen Ansprüche, **dadurch gekennzeichnet,** daß sie einstückig ausgebildet ist.

## Claims

1. Chip card envelope (1) with a closed base part (2) passing on opposite lateral longitudinal edges (4) into two guide strips (3), which together with the base part (2) form the reception space (6) for the chip card, a front slide-in opening and at least one card stop (9) positioned in the vicinity of the end face facing the slide-in opening, characterized in that the guide strips (3) are connected by means of at least one crosspiece (10), which is located in an area in which the chip is located when the chip card is slid in and which has a width at least covering the chip surface and that the base part (2) has on its surface (5) a cross-sectionally wavelike contour with at least one depression (14) running in the envelope longitudinal direction and which is located in an area containing the magnetic strip when the chip card is slid in.

2. Chip card envelope according to claim 1, characterized in that in the area (15) adjacent to the guide strips (3) the crosspiece (10) is thicker than in the centre (16).

3. Chip card envelope according to claim 1 or 2, characterized in that on the side facing the chip card the crosspiece (10, 10') has a depression (18) for receiving the chip.

4. Chip card envelope according to one of the preceding claims, characterized in that there are two spaced crosspieces (10, 10'), both crosspieces being equidistantly removed from the two facing front sides (7, 8).

5. Chip card envelope according to one of the preceding claims, characterized in that the base part (2) has two depressions (14).

6. Chip card envelope according to claim 5, characterized in that between the two depressions (14) the base part (2) has a further depression (14') for protuberances located on the chip card.

7. Chip card envelope according to one of the preceding claims, characterized in that at least one cleaning surface (11) for the magnetic strips, which preferably envelope longitudinally directed crosspieces (12), is located on the surface (5) of the base part in the vicinity of the slide-in opening (7).

8. Chip card envelope according to one of the preceding claims, characterized in that it is constructed in one piece.

## Revendications

1. Etui pour carte à puce (1) comportant une partie fermée constituant le fond (2), lequel se prolonge aux deux côtés longitudinaux (4) sous forme de deux glissières (3) qui forment avec le fond (2) la partie (6) prévue pour recevoir la carte à puce, une orifice d'introduction de la carte à l'un des bords transversaux et au moins une butée de retenue (9) de la carte au côté frontal (8) opposé à l'orifice d'introduction, l'étui étant **caractérisé par le fait** que les glissières (3) sont reliées par au moins une languette transversale (10) bombée vers l'extérieur et placée à l'endroit où la puce se trouvera après introduction de la carte, cette languette transversale ayant une largeur au moins suffisante pour recouvrir la surface de la puce **et par le fait** que le fond (2) présente sur sa surface (5) un contour de section ondulée avec au moins un évidement (14) dans le sens longitudinal de l'étui, lequel évidement se trouve à l'endroit où est placée la bande magnétique lorsque la puce est introduite.

2. Etui pour carte à puce selon la revendication 1, **caractérisé par le fait** que la languette transversale (10) est plus épaisse à proximité (15) des glissières longitudinales (3) qu'au centre (16).

3. Etui pour carte à puce selon la revendication 1 ou 2, **caractérisé par le fait** que la languette transversale (10, 10') comporte sur sa face intérieure un évidement (18) prévu pour recevoir la puce.

4. Etui pour carte à puce selon l'une des revendications ci-dessus, **caractérisé par le fait** qu'il comporte deux languettes transversales (10, 10') placées à distance l'une de l'autre, les deux languettes transversales étant à égale distance des deux côtés frontaux opposés (7, 8) de l'étui.

5. Etui pour carte à puce selon l'une des revendications ci-dessus, **caractérisé par le fait** que le fond de l'étui (2) comporte deux évidements (14).

6. Etui pour carte à puce selon la revendication 5, **caractérisé par le fait** que le fond de l'étui (2) comporte un troisième évidement (14') entre les deux évidements (14) pour les caractères en relief de la carte à puce.

7. Etui pour carte à puce selon l'une des revendications ci-dessus, **caractérisé par le fait** que la surface (5) du fond de l'étui comporte au moins une surface de nettoyage (11) pour bande magnétique à l'endroit de l'orifice d'introduction (7) de la carte, la surface de nettoyage présentant des rainures (12) orientées dans le sens longitudinal spécialement à cet effet.

8. Etui pour carte à puce selon l'une des revendications ci-dessus, **caractérisé par le fait** qu'il est conçu en une seule pièce.
